# EUROPEAN PATENT APPLICATION

(11) **EP 1 750 438 A2**
(43) Date of publication of application: **07.02.2007**
(21) Application number: 06117825.7
(22) Date of filing: 25.07.2006
(51) Int. Cl.: H04N 5/44

(54) **Apparatus for outputting received broadcast signal and method of the same**

(30) Priority: 04.08.2005 KR 20050071438
(71) Applicant: Samsung Electronics Co., Ltd., Suwon-si 442-742 Gyeonggi-Do (KR)
(72) Inventor: Oh, Keum-Yong, Yeongtong-gu, Suwon-si Gyeonggi-do (KR)
(74) Representative: Robinson, Ian Michael

(57) **Abstract**

An apparatus for outputting received broadcast signals may include a tuner unit (310) that receives broadcast signals through at least one tuner, a distribution unit (320) that distributes the received broadcast signals according to broadcasting systems, a control unit (360) that extracts at least one of video signals, audio signals and data signals from broadcasting system-dependent broadcast signals distributed by the distribution unit in accordance with a user's instruction, and an output unit (370) that outputs the extracted signals.

## Description

Apparatuses and methods consistent with the present invention relate to outputting received broadcast signals, and more particularly to outputting received broadcast signals wherein the broadcast signals are received through multiple tuners, and a user interface is displayed according to the received broadcast signals.

In recent years, with the development of digital techniques, the digital era of broadcasting including ground wave broadcasting, cable broadcasting and satellite broadcasting has arrived.

In addition to the commercial advantage of using multiple channels (for example, about five channels through TV broadcasting) unlike analog broadcasting using only one channel, digital broadcasting is attractive due to its high image and sound quality, interactive services, Internet connectivity, and other features.

The U.S. and Europe have taken the lead in producing digital set-top boxes, which are an apparatus for receiving digital broadcast signals, and their popularity is also growing in the Middle East and Eastern Asia with the introduction of digital broadcasting.

As an apparatus for receiving digital broadcast signals, a digital set-top box incorporates functions for receiving digitized signals transmitted via a satellite, cable or ground wave from a broadcasting station, which have been prepared by encoding analog content, and then converting the received signals into analog signals, which viewers can watch via a TV.

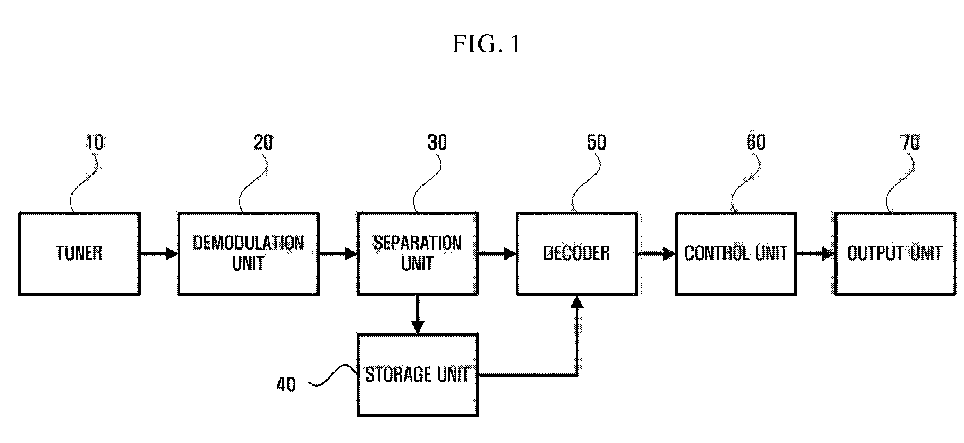

Figure 1 is a block diagram illustrating a related art apparatus for receiving broadcast signals. The related art apparatus for receiving broadcast signals includes a tuner 10 that receives broadcast signals, a demodulation unit 20 that demodulates the received broadcast signals, a separation unit 30 that separates target signals from the demodulated broadcast signals, a storage unit 40 that stores the separated signals, a decoder 50 that decodes the stored signals, and a control unit 60 that outputs the decoded signals through an output unit 70.

In this case, the signals separated by the separation unit 30 include video signals, audio signals and data signals.

The control unit 60 can output the signals via the output unit 70 without storing them.

The operating system of the related art apparatus for receiving broadcast signals is as follows.

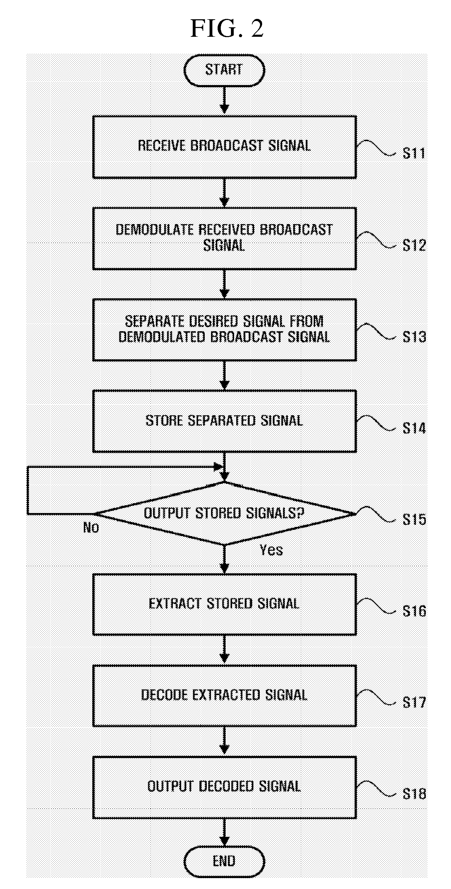

Figure 2 is a flow chart illustrating the related art process of receiving broadcast signals.

As illustrated in the Figure 2, the tuner 10 receives broadcast signals (S11), and then the demodulation unit 20 demodulates the received broadcast signals (S12).

The demodulated broadcast signals are separated by the separation unit 30 into video signals, audio signals and data signals (S13) and the separated signals are stored in the storage unit 40 (S14).

At a user's request for outputting of the stored signals (S15), the control unit 60 extracts the stored signals from the storage unit 40 (S16).

The extracted signals are decoded by the decoder 50 (S17) and the decoded signals are output through the output unit 70 (S18).

During the real-time outputting of the signals separated by the separation unit 30, the control unit 60 allows the signals decoded by the decoder 50 to be output through the output unit 70.

In the case of the related art apparatus for receiving broadcast signals, broadcast signals are received by only one tuner 10, which is used to output video and audio data or to search channels. Thus, while channels are being searched, the reception of video and audio signals must be interrupted. That is, the tuner 10, which is receiving video and audio signals, searches usable frequency cannels, which results in interrupting the reception of video and audio signals, and the search time increases as the number of channels increases.

Therefore, a longer search time is required in an apparatus that receives a ground wave, and/or cable and satellite broadcast signals. An alternative method is needed for detecting multiple channels quickly and easily while receiving broadcast signals transmitted from various broadcasting stations.

According to the present invention there is provided an apparatus and method as set forth in the appended claims. Preferred features of the invention will be apparent from the dependent claims, and the description which follows.

The present invention provides an apparatus that can receive broadcast signals through multiple tuners, and output them.

The present invention also provides a method that can receive broadcast signals through multiple tuners, and output them.

The present invention also provides a method and apparatus which displays a user interface according to the received broadcast signals.

According to an aspect of the invention, an apparatus that outputs received broadcast signals may include a tuner unit that receives broadcast signals through at least one tuner; a distribution unit that distributes the received broadcast signals according to broadcasting systems; a control unit that extracts at least one of the video signals, audio signals and data signals from broadcasting system-dependent broadcast signals distributed by the distribution unit in accordance with a user's instruction; and an output unit that outputs the extracted signals.

According to another aspect of the invention, a method of outputting received broadcast signals may include: receiving broadcast signals through at least one tuner; distributing the received broadcast signals according to broadcasting systems; extracting at least one of the video signals, audio signals and data signals in accordance with a user's instruction; and outputting the extracted signals.

The above and other aspects of the present invention will become more apparent by describing in detail exemplary embodiments thereof with reference to the attached drawings in which:
Figure 1 is a block diagram illustrating a related art apparatus for receiving broadcast signals;
Figure 2 is a flow chart illustrating a related art process of receiving broadcast signals;
Figure 3 is a block diagram illustrating an apparatus for outputting received broadcast signals according to an exemplary embodiment of the present invention;
Figure 4 is a block diagram illustrating a control unit for performing multi-channel scanning according to an exemplary embodiment of the present invention;
Figure 5 is a diagram illustrating the output of the received broadcast signals according to an exemplary embodiment of the present invention;
Figure 6 is a diagram illustrating the output of the received broadcast signals according to another exemplary embodiment of the present invention;
Figure 7 is a diagram illustrating the output of the received broadcast signals according to another exemplary embodiment of the present invention;
Figure 8 is a flow chart illustrating the process of outputting the received broadcast signals according to an exemplary embodiment of the present invention; and
Figure 9 is a flow chart illustrating the operation of a control unit according to an exemplary embodiment of the present invention.

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

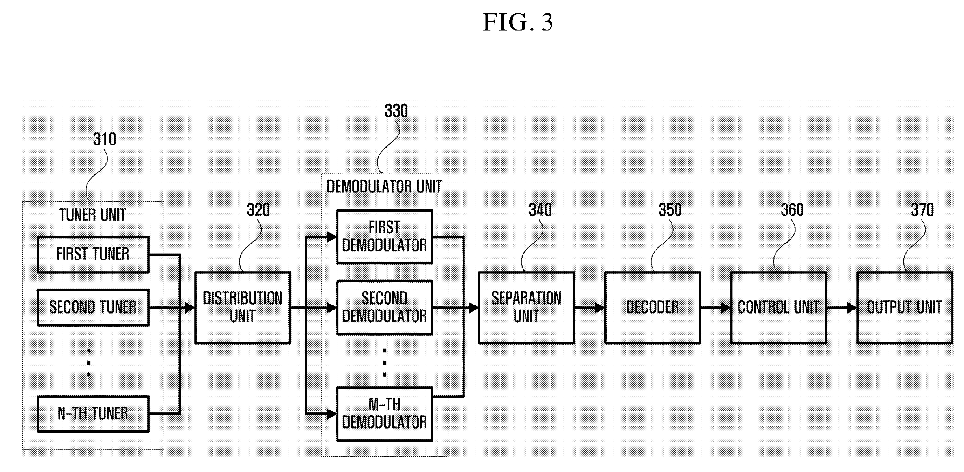

Figure 3 is a block diagram illustrating an apparatus for outputting received broadcast signals according to an exemplary embodiment of the present invention. The apparatus for outputting received broadcast signals may include a tuner unit 310, a distribution unit 320, a demodulation unit 330, a separation unit 340, a decoder 350, a control unit 360, and an output unit 370.

The tuner unit 310 receives broadcast signals through one or more tuners. In this case, the broadcast signals are received in different forms according to broadcasting systems. Each of the tuners, which are included in the tuner unit 310, may receive only broadcast signals of a corresponding to its broadcasting system, or all of the broadcast signals for all of the different broadcasting systems.

Each of the broadcasting systems uses a different frequency, which requires different antenna forms. That is, an antenna corresponding to each broadcasting system may be connected to the apparatus. The antenna corresponding to each broadcasting system may be connected to a tuner that corresponds to each broadcasting system, or it may be connected to all of the tuners.

For example, a ground wave antenna may be connected to a tuner that receives only ground wave broadcasting, a satellite broadcasting antenna may be connected to another tuner that receives only satellite broadcasting, or the ground wave antenna and the satellite broadcasting antenna may be connected to all the tuners that are included in the tuner unit 310.

Each of the tuners that are included in the tuner unit 310 may discriminate a broadcasting system of received broadcast signals by recognizing frequencies of the received broadcast signals, and then receives broadcast signals according to the corresponding broadcasting system.

Further, the tuner unit 310 may receive the broadcast signals in accordance with a control instruction from the control unit 360. That is, the control unit 360 may assign a corresponding frequency to each tuner of the tuner unit 310. Therefore, the apparatus for receiving broadcast signals device can simultaneously scan multiple channels. For example, in the case in which the tuner unit 310 includes four tuners, the control unit 360 divides a frequency band according to a broadcasting system into four frequency bands, and then assigns each tuner of the tuner unit 310 to receive only one frequency band. As a result, the apparatus for receiving broadcast signals device can simultaneously scan four different channels.

The respective broadcasting signals received by the tuner unit 310 are transmitted to the distribution unit 320. The distribution unit 320 distributes the received broadcast signals to the demodulation unit 330 according to a broadcasting system. That is, the distribution unit 320 analyzes the received broadcast signals and confirms a corresponding broadcasting system thereof, and then transmits the received broadcast signals to a corresponding demodulator among demodulators that are included in the demodulation unit 330. At this time, the frequency or data of the received broadcast signals may be analyzed.

For example, the tuner unit 310 transmits broadcast signals along with their frequencies to the distribution unit 320. Accordingly, the distribution unit 320 can confirm a broadcasting system corresponding to the received broadcasting signal. Alternatively, the distribution unit 320 can also confirm a broadcasting system by analyzing data included in the broadcasting signal. This method is based on the fact that ground wave broadcasting, cable broadcasting and satellite broadcasting use different data formats.

The distribution unit 320 intermediates between the tuner unit 310 and the demodulation unit 330. The tuner unit 310 and the demodulation unit 330 have multiple tuners and multiple demodulators, respectively, but their numbers may not be same. The distribution unit 320 can selectively transmit broadcast signals received from the tuner unit 310 to the demodulation unit 330. At this time, a selection criterion may be determined by a user, or it may be automatically determined.

For example, if the tuner unit 310 receives broadcast signals of ground wave broadcasting and satellite broadcasting, the distribution unit 320 may transmit only signals of ground wave broadcasting to the demodulation unit 330 or transmit only signals of satellite broadcasting to the demodulation unit 330 in accordance with a user's instruction. Further, the distribution unit 320 can transmit one specific channel selected from the ground wave broadcast or satellite broadcast to the demodulation unit 330.

Furthermore, the distribution unit 320 may analyze the intensity of the broadcasting signal received from the tuner unit 310, and may transmit the signal to the demodulation unit 330 only when the intensity of the broadcasting signal is equal to or greater than a predetermined threshold value. For example, if a first tuner of the tuner unit 310 receives a broadcasting signal whose intensity is equal to or greater than the threshold value, and a second tuner of the tuner unit 310 receives a broadcasting signal whose intensity is less than the threshold value, the distribution unit 320 may transmit only the broadcasting signal received by the first tuner to the demodulation unit 330.

As described above, the antennas according to the broadcasting systems, which are connected to the apparatus for receiving broadcast signals, may be connected to all of the tuners included in the tuner unit 310, and thus one tuner may receive different broadcast signals according to a plurality of broadcasting systems. In this case, if the intensities of the plurality of received broadcast signals are all equal to or greater than the threshold value, the distribution unit 320 may transmit the respective broadcasting signals to the demodulation unit 330.

The demodulation unit 330 demodulates broadcast signals transmitted differently according to the broadcasting systems, which have been distributed by the distribution unit 320, by means of at least one demodulator included in the demodulation unit 330. That is, the demodulation unit 330 extracts the original broadcast signals from the modulated waves.

Each of the demodulators of the demodulation unit 330 may include an automatic-gain-control amplifier, an oscillation unit, an analog-to-digital converter (ADC), a symbol recovery unit, and a channel decoder.

The automatic-gain-control amplifier serves to compensate for signal gain to convert the transmitted broadcast signals into signals capable of being subjected to analog-to-digital conversion. Specifically, the automatic gain control amplifying unit amplifies the output of the broadcast signals for normal analog/digital conversion because the received broadcast signals are very weak.

The oscillator generates the sampling frequency for sampling received broadcast signals, and the ADC converts the broadcast signals amplified by the automatic gain control amplifying unit into digital signals according to the sampling frequency generated by the oscillation unit.

The converted digital broadcast signals are transmitted to the symbol recovery unit, which serves to reduce errors generated between digital signals transmitted from the ADC by using the feedback of timing errors of symbols created by Baseband signal processing. After eliminating phase noise and inter-symbol interference, the symbol recovery unit transmits the signals to the channel decoder.

The channel decoder restores synchronizing signals included during the transmission of the Baseband signals, and restores received data, which are broadcast signals, by using the restored synchronizing signals.

The demodulation processes described above are general demodulation processes, which can be different according to broadcasting systems. For example, demodulators of the demodulation unit 330 may demodulate only specific signals distinguished by a specific broadcasting system. Therefore, the distribution unit 320 confirms a corresponding broadcasting system, and then transmits the signals to a corresponding demodulator.

The broadcast signals demodulated by the demodulation unit 330 are transmitted to the separation unit 340, which serves to separate video signals, audio signals and data signals from the demodulated broadcast signals. In this case, the data signals may include a broadcasting system and a channel frequency. Therefore, the control unit 360 can confirm the broadcasting system and the channel frequency of the received broadcast signals.

The separated video signals, audio signals and data signals are transmitted to the decoder 350. Then, the decoder 350 converts the video signals into digital video signals, and converts the audio signals into digital audio signals. These converted digital video and audio signals are transmitted to the control unit 360.

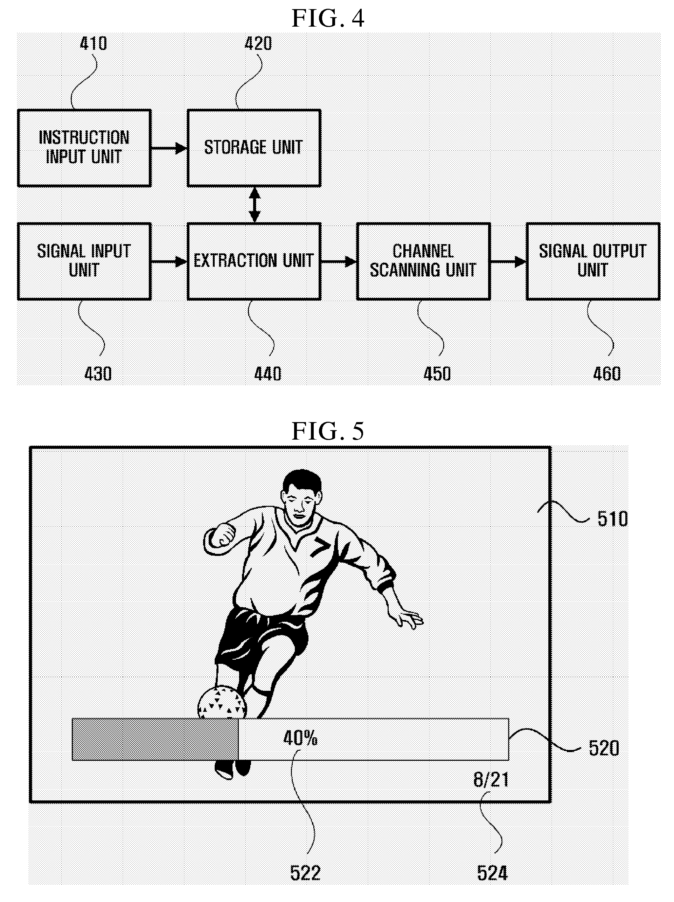

The control unit 360 extracts video signals, audio signals and data signals from the broadcast signals transmitted by the decoder 350 in accordance with a user's instruction, and allows the extracted signals to be output by the output unit 370. The function of the control unit 360 is illustrated in the following in more detail with reference to Figure 4.

The output unit 370 may include a video output unit and an audio output unit. The video output unit has a display unit, such as a cathode ray tube (CRT), a liquid crystal display (LCD), a light-emitting diode (LED), a plasma display panel (PDP), or the like, which is capable of displaying the video signals. The video output unit serves to display the transmitted video signals.

Further, the audio output unit, for example, a speaker or an earphone, is capable of outputting the audio signals. The audio output unit serves to output the transmitted audio signals.

Figure 4 is a block diagram illustrating the control unit 360 that performs multi-channel scanning according to an exemplary embodiment of the present invention. The control unit 360 may include an instruction input unit 410, a storage unit 420, a signal input unit 430, an extraction unit 440, a channel scanning unit 450, and a signal output unit 460.

The instruction input unit 410 receives instructions from a user. In this case, the instructions may include a broadcasting system, a frequency band, the number of tuners, and others. A user is allowed to designate a broadcasting system for channel scanning, a frequency band according to the corresponding broadcasting system, and the number of tuners for the channel scanning.

For example, a user may give an instruction to divide the whole frequency band of ground waves into four frequency bands of the same bandwidth, and make four tuners scan the corresponding channels. A user can also give another instruction to divide a specific frequency band of ground waves into two frequency bands of the same bandwidth, and make two tuners scan the corresponding channels while giving an instruction to divide the whole frequency band of satellite broadcasting into four frequency bands of the same bandwidth, and make three tuners scan the corresponding channels.

In this case, in a broadcasting system, a frequency band may be divided equally or differently as illustrated in the exemplary embodiment of the present invention. As described in the exemplary embodiment of the present invention, the number of divided frequency bands may not be equal to the number of tuners for receiving the broadcast signals. If the number of divided frequency bands is not equal to the number of tuners for receiving broadcast signals, the distribution unit 320 analyzes the intensity of the received broadcast signals, and transmits the received broadcast signals to the demodulation unit 330.

Therefore, a user can give an instruction for multiple tuners to receive a very weak broadcasting signal such that the apparatus can perform more accurate channel scanning.

The instruction input unit 410 can be input with an instruction from a user about screen layout. That is, a user may make the apparatus output video signals and audio signals according to one or multiple broadcast signals while making the apparatus perform channel scanning. At this time, the instruction input unit 410 may be selectively input with channels from which video signals and audio signals are output and channels to be scanned.

The storage unit 420 stores the instruction input by a user. The storage unit 420 may be a semiconductor element, which is a nonvolatile memory such as a flash memory and in which input/output of data is freely performed. Further, the semiconductor element may be replaced with a compact flash (CF) card, a secure digital (SD) card, a smart media (SM) card, a multimedia card (MMC), a memory stick or a hard disc.

The signal input unit 430 receives the broadcast signals decoded by the decoder 350. Specifically, the signal input unit 430 receives video signals, audio signals and data signals. In this case, the data signals may include a channel frequency.

The decoded signals are transmitted to the extraction unit 440, and the extraction unit 440 analyzes the transmitted signals to extract a channel frequency. At this time, the data signals may be extracted from the decoded broadcast signals. The video signals and the audio signals among the decoded broadcast signals are output through the output unit 370.

As a method of extracting a channel frequency, a method of searching the frequency band of the transmitted signals, or a method of analyzing the data (data signals) transmitted together with broadcast signals can be used. The data transmitted together with broadcast signals may include a channel frequency and a broadcasting system of the broadcast signals. In order for the extraction unit 440 to extract the channel frequency, the tuner unit 310 may transmit not only broadcast signals but also a broadcasting system and a channel frequency to the distribution unit 320.

The channel frequency extracted by the extraction unit 440 is transmitted to the channel scanning unit 450. The channel scanning unit 450 checks whether the transmitted channel frequency corresponds to a user's instruction with reference to the user's instruction stored in the storage unit 420. If the transmitted channel frequency corresponds to the user's instruction, the channel scanning unit 450 detects the progress of channel scanning with reference to the corresponding channel frequency and then allows the results of the detection to be output by the signal output unit 460. That is, the channel scanning unit 450 detects the progress of channel scanning in the designated frequency band. In addition, if the transmitted channel frequency does not correspond to the user's instruction, the channel scanning unit 450 finishes the process of channel scanning.

In this case, the progress of channel scanning, which is information indicating how many bands of assigned frequencies for searching are completely searched, can be represented by a percentage. For example, if the assigned frequency band is 100 to 200 MHz and the completely searched frequency band is 100 to 160 MHz, the progress of channel scanning is represented as 60, which is transmitted to the signal output unit 460.

The signal output unit 460 transmits the channel frequency transmitted by the channel scanning unit 450 to the output unit 370, and the video output unit of the output unit 370 displays it. Accordingly, a user finds out the progress of channel scanning corresponding to a specific broadcasting system.

Figure 5 is a diagram illustrating the output of the received broadcast signals according to an exemplary embodiment of the present invention, which illustrates the simultaneous output of video signals 510, audio signals and the results of channel scanning 520, 522, and 524.

More than two tuners among the tuners that are included in the tuner unit 310 can receive broadcast signals. For example, a first tuner of the tuner unit 310 may receive video signals and audio signals, and a second tuner may receive the data including channel frequency.

The first and second tuners transmit the received video signals, audio signals and data signals (broadcast signals) to the distribution unit 320. Then, the distribution unit 320 analyzes the received broadcast signals (video, audio and data signals) to confirm a corresponding broadcasting system, and transmits the broadcast signals to the demodulation unit 330 according to the corresponding broadcasting system. That is, the distribution unit transmits the broadcast signals to one of demodulators of the demodulation unit 330 that is able to demodulate broadcast signals corresponding to the received broadcasting system.

According to the exemplary embodiment, the broadcast signals received by the first tuner and the broadcast signals received by the second tuner may be the same or different. The distribution unit 320 transmits the broadcast signals received according to a specific broadcasting system to the corresponding demodulator, and then the demodulation unit 330 demodulates the received broadcast signals. That is, the demodulation unit 330 extracts the original broadcast signals from the modulated waves.

The demodulated broadcast signals are transmitted to the separation unit 340, and the separation unit 340 separates video signals, audio signals and data signals from the demodulated broadcast signals. The separation unit 340 separates video signals and audio signals from the broadcast signals received via the first tuner, and separates data signals from the broadcast signals received via the second tuner. At this time, the broadcast signals received via the second tuner may not include video signals and audio signals.

The separated video signals, audio signals, and data signals are transmitted to the decoder 350, and the decoder 350 converts the received signals into digital signals. The digitalized video signals, audio signals and data signals are transmitted to the control unit 360.

The digitalized broadcast signals are input to the signal input unit 430 of the control unit 360, which are then transmitted to the extraction unit 440. Then, the extraction unit 440 analyzes the received signals, followed by the output of digital video signals 510 and digital audio signals by the output unit 370. In addition, the digital data signals are transmitted to the channel scanning unit 450.

The channel scanning unit 450 analyzes the received digital data signals with reference to the user's instruction stored in the storage unit 420, and then performs channel scanning. The channel scanning unit checks whether the channel frequency included in the received digital data signals corresponds to the instruction of a user, and detects the progress of channel scanning. In addition, the detected channel scanning results 520, 522, and 524 are output through the signal output unit 460, and are displayed by the output unit 370.

As shown in Figure 5, the results of channel scanning are displayed in the form of a progress bar 520, or as a percentage 522. It is also possible to display the general information on channel scanning including broadcasting method, channel frequency band and the number of channels being searched of the total channels 524.

The channels are scanned on the basis of the broadcast signals received by multiple tuners, and the results can be displayed by a progress bar 520, as illustrated in Figure 5. For example, the whole frequency band formed by one broadcasting system may be divided into two bands, which are assigned to two tuners. Then, each tuner receives broadcast signals containing information on a channel frequency, and displays it. The channel scanning becomes faster when two tuners are used, and the results are supplied to a user by displaying them on the device.

The progress of channel scanning according to two different broadcasting systems can be displayed by receiving broadcast signals including channel frequencies using two tuners.

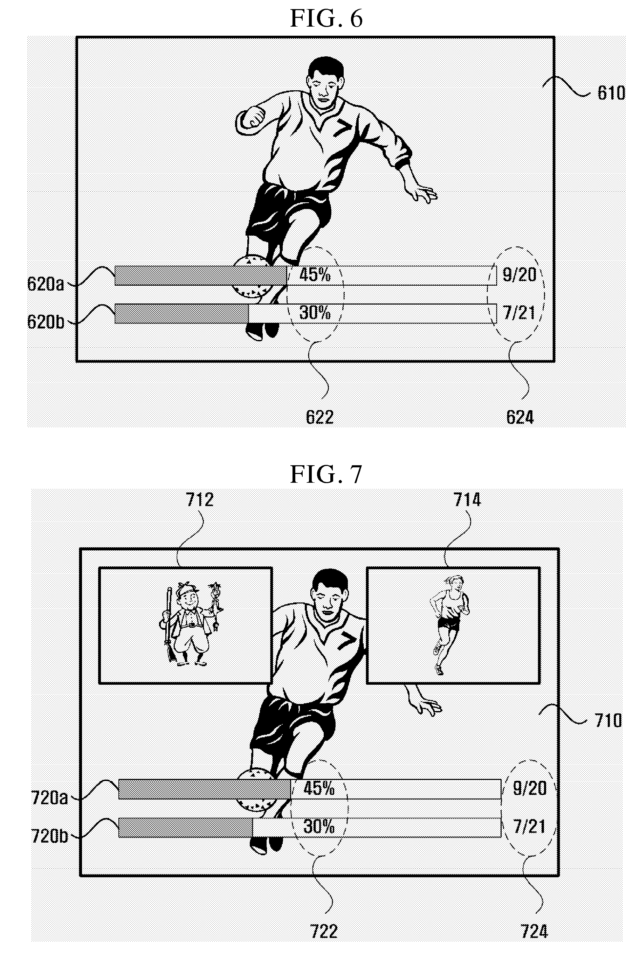

Figure 6 is a diagram illustrating the output of the received broadcast signals according to another exemplary embodiment of the present invention, which illustrates the simultaneous output of one kind of video signal 610, audio signal and the results of multiple channel scanning 620a, 620b, 622, and 624.

For the above simultaneous output, more than three tuners among the tuners included in the tuner unit 310 receive broadcast signals. A first tuner included in the tuner unit 310 receives video signals and audio signals, the "n" other tuners receive data signals containing channel frequencies.

Therefore, the first tuner and the "n" tuners transmit the received video signals, audio signals and data signals (that is, broadcast signals) to the distribution unit 320, and the distribution unit 320 analyzes the received broadcast signals to determine a corresponding broadcasting system for each signal, which will be sent to the demodulator of the demodulation unit 330 according to the corresponding broadcasting system. That is, the broadcast signals distinguished by each broadcasting system are transmitted to each corresponding demodulator of the demodulation unit 330 that is able to demodulate the broadcast signals according to the received broadcasting system.

The demodulated broadcast signals are transmitted to the separation unit 340, and are separated into video signals, audio signals and data signals. The signals are digitized by the decoder 350, and then transmitted to the control unit 360.

The control unit 360 analyzes the received signals and allows the received signals to be output through the output unit 370. Therefore, the output unit 370 outputs one kind of video signal 610 and audio signals, and the results of multiple channel scanning 620a, 620b, 622, and 624, as illustrated in Figure 6.

As illustrated in Figure 6, the results of channel scanning can be displayed in the form of progress bars 620a and 620b, or as a percentage 622. In addition, the general information including a broadcasting system, a channel frequency band, the number of channels being scanned among the total channels 624, or the like can be displayed.

The display of the channel scanning results as a progress bar is easily recognizable to a user. Even though multiple tuners, each of which receives broadcast signals according to one broadcasting system, are used, the results of the channel scanning can also be displayed in one progress bar.

The output unit 370 can only display the channel scanning results, and not the video signals. One or more results of channel scanning can be displayed while displaying an empty screen or a predetermined stored picture (static picture or moving picture) through the output unit 370.

Figure 7 is a diagram illustrating the output of the received broadcast signals according to another exemplary embodiment of the present invention, which illustrates the simultaneous output of multiple video signals 710, 712, and 714 and audio signals, and multiple channel scanning results 720a, 720b, 722, and 724.

For this simultaneous output, more than four tuners among the tuners that are included in the tuner unit 310 can receive broadcast signals. Two of the tuners included in the tuner unit 310 receive video signals and audio signals, and the remaining two tuners receive multiple data signals containing channel frequencies.

The operations of the distribution unit 320, the demodulation unit 330, and the control unit 360 have been illustrated hereinbefore with reference to Figures 5 and 6, and thus the description thereof has been omitted.

As illustrated in Figure 7, when multiple video signals are displayed, one video signal 710 is displayed on the entire screen and the other video signals 712 and 714 are displayed in some parts of the screen. However, it is also possible that the screen may be equally divided by the number of received video signals and the video signals are displayed in the divided regions. In the case in which one video signal 710 is displayed on the entire screen, the corresponding audio signal is output by the output unit 370. In the case in which video signals are displayed in each region divided equally on the screen, a user selects one of them and the audio signal corresponding to the selected video signal is output by the output unit 370.

As illustrated in Figure 7, the results of channel scanning can be displayed in the form of progress bars 720a and 720b or as a percentage 722, and the general information including a broadcasting system, a channel frequency band and the number of a channel being scanned among the total channels 724 can also be displayed.

The display of the channel scanning results as a progress bar is easily distinguishable by a user. In this case, even though multiple tuners receive broadcast signals of one type transmitted according to a specific broadcasting system, one progress bar can display the results of channel scanning.

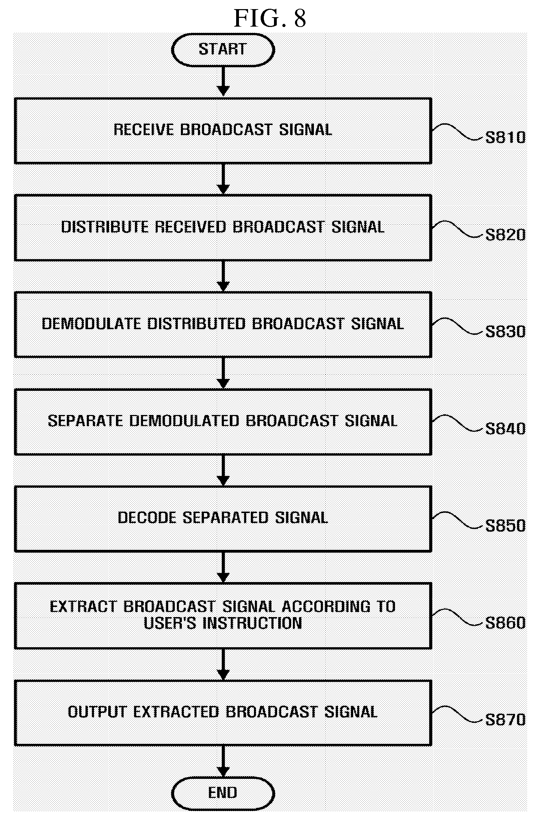

Figure 8 is a flow chart illustrating the processes of outputting the received broadcast signals according to an exemplary embodiment of the present invention. First, the tuner unit 310 receives broadcast signals through more than one tuner included in the tuner unit 310 (S810). Each tuner of the tuner unit 310 may receive only broadcast signals corresponding to a broadcasting system that can be processed by each tuner, or may receive broadcast signals acceptable for all broadcasting systems, or may receive only the signals corresponding to the assigned frequency band.

The broadcast signals received through the tuner unit 310 are transmitted to the distribution unit 320, and the distribution unit 320 distributes the received broadcast signals to the demodulation unit 330 according to a broadcasting system or the size of the received signals (S820). The distribution unit 320 investigates the frequency of the received broadcast signals or analyzes the data included in the broadcast signals to confirm a broadcasting system. Then, the distribution unit 320 selects one (according to the corresponding broadcasting system) among multiple demodulators included in the demodulation unit 330 in order to transmit the broadcast signals to the corresponding demodulator.

By using one or more demodulators that are included in the demodulation unit 330, the demodulation unit 330 demodulates the broadcast signals transmitted according to a broadcasting system distributed by the distribution unit 320 (S830). Accordingly, the original broadcast signals are extracted from the modulated signals.

The extracted original broadcast signals are transmitted to the separation unit 340. The separation unit 340 separates the demodulated broadcast signals into video signals, audio signals and data signals (S840). The data signals may include the information on a broadcasting system and a channel frequency. Therefore, the control unit 360 can confirm a broadcasting system and a channel frequency of the received broadcast signals.

The separated broadcast signals are transmitted to the decoder 350, and the decoder 350 converts separated broadcast signals into digital signals (S850). The digitized broadcast signals, that is, digital video signals, digital audio signals and digital data signals, are transmitted to the control unit 360. The control unit 360 extracts video signals, audio signals and data signals from the received broadcast signals in accordance with a user's instruction (S860).

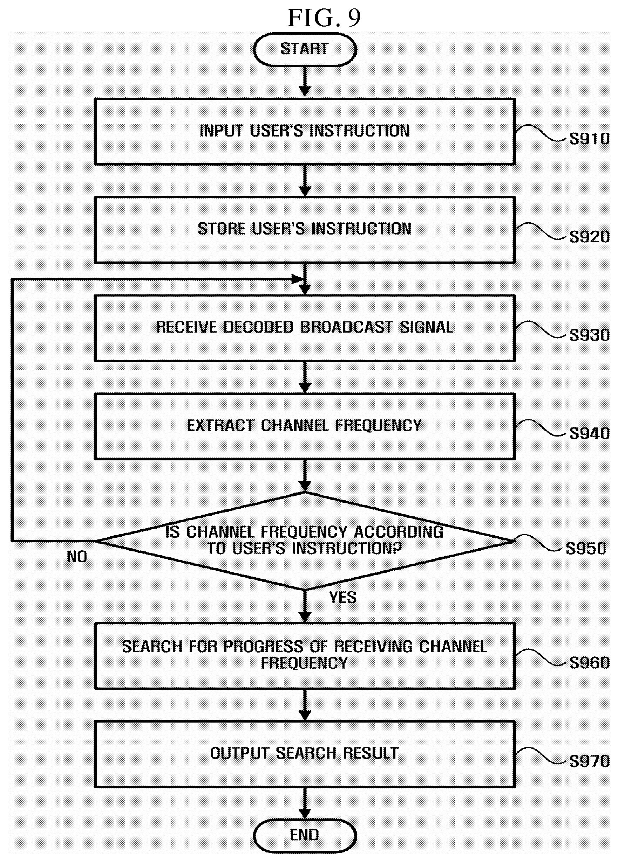

That is, the output unit 370 outputs the broadcast signals according to a user's instruction. The operations of the control unit 360 will be illustrated in more detail hereinafter with reference to Figure 9.

The broadcast signals extracted by the control unit 360 are transmitted to the output unit 370. The output unit 370 outputs the received signals according to the instruction of the control unit 360 (S870).

The output unit 370 is able to output one or more channel scanning results together with one or more video signals and audio signals, which can be determined by a user.

Figure 9 is a flow chart illustrating the operation of the control unit 360 according to an exemplary embodiment of the present invention.

In order to output the received broadcast signals through the output unit 370, the user's instruction is input to the instruction input unit 410 of the control unit 360 (S910). In this case, the instruction of a user can include a broadcasting system, a frequency band, the number of tuners, and others. The input user instruction is stored in the storage unit 420 (S920).

The signal input unit 430 receives the broadcast signals decoded by the decoder 350 (S930) That is, the signal input unit 430 receives digital video signals, digital audio signals, and digital data signals which may include information on channel frequency.

The decoded signals are transmitted to the extraction unit 440, and then the extraction unit 440 analyzes the received signals to extract a corresponding channel frequency (S940). The extraction unit 440 checks whether video signals and audio signals are included in the received signals. If they are included, the extraction unit 440 extracts a corresponding channel frequency.

As a method of extracting the channel frequency (performed by the extraction unit 440), a method of searching for a frequency of the received signals or a method of investigating the information transmitted together with the broadcast signals may be used.

The channel frequency extracted by the extraction unit 440 is transmitted to the channel scanning unit 450. The channel scanning unit 450 checks whether the received channel frequency corresponds to that instructed by a user with reference to the instruction of a user stored in the storage unit 420 (S950), which means the channel scanning unit 450 confirms a broadcasting system and a frequency band. If the received channel frequency corresponds to that instructed by a user, the channel scanning unit 450 investigates the progress of the channel scanning (S960), and allows the investigated results to be output through the signal output unit 460 (S970). If the received channel frequency does not correspond to that instructed by a user, for example, if the channel frequency band is exceeded, channel scanning processes are terminated.

The signal output unit 460 transmits the channel frequency received from the channel scanning unit 450 to the output unit 370, followed by output of the signals on the screen.

It will be understood by those of ordinary skill in the art that various replacements, modifications and changes in form and details may be made therein without departing from the spirit and scope of the present invention as defined by the following claims. Therefore, it is to be appreciated that the above described exemplary embodiments are for purposes of illustration only and not to be construed as a limitation of the invention.

As previously described, the method of and the apparatus for outputting received broadcast signals of the exemplary embodiments of the present invention produce one or more of the following effects. Also, the present invention is not required to produce one or more of the following effects, and an illustrative, non-limiting embodiment of the present invention may not produce any of the following effects.

First, enabling simultaneous multiple channel scanning by receiving broadcast signals through multiple tuners included in the apparatus.

Second, allowing a user to easily recognize the progress of channel scanning by displaying a user interface according to a plurality of types of received broadcast signals.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for outputting received broadcast signals, the apparatus comprising:
a tuner unit (310) that receives broadcast signals through at least one tuner;
a distribution unit (320) that distributes the received broadcast signals according to broadcasting systems;
a control unit (360) that extracts at least one of video signals, audio signals and data signals from the distributed broadcast signals in accordance with a user instruction; and
an output unit (370) that outputs the extracted signals.

2. The apparatus of claim 1, wherein the broadcasting systems comprise at least one of a ground wave broadcasting system, a cable broadcasting system, and a satellite broadcasting system.

3. The apparatus claim 1 or 2, wherein the output unit (370) outputs results of channel scanning of the received broadcast signals.

4. The apparatus of claim 1, 2 or 3 wherein the output unit (370) outputs results of channel scanning for the distributed broadcast signals.

5. The apparatus of any preceding claim, wherein the control unit (360) comprises:
an instruction input unit (410) that receives the user instruction;
an extraction unit (440) that extracts channel frequencies from the broadcast signals;
a channel scanning unit (450) that searches the progress of receiving a channel frequency corresponding to the user's instruction among the extracted channel frequencies; and
a signal output unit (460) that outputs results of searching by the channel scanning unit (450).

6. The apparatus of claim 5, wherein the user instruction comprises instructions concerning at least one of a broadcasting system, a frequency band, and the number of tuners.

7. The apparatus of claim 5 or 6, wherein the control unit (360) further comprises a storage unit (420) that stores the user instruction.

8. The apparatus of any of any preceding claim, wherein the tuner unit (310) comprises a plurality of tuners.

9. The apparatus of claim 8, wherein selected ones of the plurality of tuners receive broadcast signals from selected ones of the broadcasting systems.

10. The apparatus of claim 8, wherein each of the plurality of tuners receive broadcast signals from each of the broadcasting systems.

11. The apparatus of any preceding claim, further comprising a demodulator unit (330) which demodulates the broadcast signals distributed by the distribution unit (320).

12. The apparatus of claim 11, wherein the demodulator unit (330) comprises a plurality of demodulators.

13. The apparatus of claim 12, wherein selected ones of the plurality of demodulators demodulate broadcast signals from selected ones of the broadcasting systems.

14. The apparatus of claim 12, wherein each of the plurality of demodulators demodulate broadcast signals from each of the broadcasting systems.

15. A method of outputting received broadcast signals, the method comprising:
receiving broadcast signals through at least one tuner;
distributing the received broadcast signals according to broadcasting systems;
extracting at least one of video signals, audio signals and data signals from the distributed broadcast signals in accordance with a user instruction; and
outputting the extracted signals.

16. The method of claim 15, wherein the broadcasting systems comprise at least one of a ground wave broadcasting system, a cable broadcasting system, and a satellite broadcasting system.

17. The method of claim 15 or 16, wherein the outputting of the extracted signals includes outputting results of channel scanning of the received broadcast signals.

18. The method of claim 15, 16 or 17, wherein the outputting of the extracted signals comprises outputting the results of channel scanning of the distributed broadcast signals.

19. The method of claim any of claims 15 to 18, wherein the extracting of at least one of video signals, audio signals and data signals comprises:
inputting the user instruction;
extracting channel frequencies from the broadcast signals;
searching the progress of receiving a channel frequency corresponding to the user instruction among the extracted channel frequencies; and
outputting results of the searching.

20. The method of claim 19, wherein the user instruction comprises at least one of a broadcasting system, a frequency band, and the number of tuners.
